# EUROPÄISCHE PATENTSCHRIFT

(11) **EP 0 795 513 B1**
(45) Veröffentlichungstag und Bekanntmachung des Hinweises auf die Patenterteilung: **10.04.2002**
(21) Anmeldenummer: 97100413.0
(22) Anmeldetag: 13.01.1997
(51) Int. Cl.: B66C 13/04, B66D 3/18

(54) **Balancier-Hebegerät**
Balancing and lifting apparatus
Appareil d'équilibrage et de levage

(30) Priorität: 14.03.1996 DE 29604729 U
(43) Veröffentlichungstag der Anmeldung: 17.09.1997
(73) Patentinhaber: Demag Cranes & Components GmbH, 58300 Wetter (DE)
(72) Erfinder: Kühn, Robert Dr., 86756 Reimlingen (DE); Bittenbinder, Wolfgang A., 73469 Utzmemmingen (DE)
(74) Vertreter: Meissner, Peter E., Dipl.-Ing.

(56) Entgegenhaltungen:
- WO-A-86/07042
- WO-A-93/00285
- US-A- 3 921 959
- US-A- 4 658 971
- US-A- 5 269 644

## Beschreibung

Die Erfindung betrifft ein Balancier-Hebegerät zum Heben und quasi kraftfreien manuellen Bewegen einer Last, umfassend einen Hubantrieb, der mittels eines biegeschlaffen Zwischenorgans mit einem Lastaufnahmemittel verbunden ist, wobei zwischen Hubantrieb und Lastaufnahmemittel oberhalb des letzteren ein Lastmeßsensor eingeschaltet ist, der ein dem gemessenen Lastwert entsprechendes Signal an eine weiterverarbeitende Steuerung liefert, die ihrerseits den Hubantrieb so steuert, daß die Last in der Schwebe gehalten ist, und wobei in Kraftflußrichtung zwischen Lastmeßsensor und Zwischenorgan ein Führungsgriff angeordnet ist. Ein solches Gerät ist aus der Druckschrift WO-A-93/00285 bereits bekannt.

Bei bekannten derartigen Hebegeräten werden der Führungsgriff und der Lastmeßsensor als eigenständige Baueinheiten ausgeführt und so zueinander angeordnet, daß der Führungsgriff entweder unmittelbar in Kraftflußrichtung oberhalb des Lastmeßsensors liegt, oder vom obenliegenden Bereich des Lastmeßgerätes seitlich auskragt.

Diese bekannten Bauweisen haben mehrere Nachteile. Werden Lastmeßsensor und Führungsgriff in Serie übereinander angeordnet, so führt dies zu einem großen Abstand zwischen Führungsgriff und Lastaufnahmemittel. Daraus folgen Einbußen bei der Hubhöhe und hoher Kraftaufwand bei Schwenkbewegungen der Last um eine horizontale Achse. Kragt dagegen der Führungsgriff vom obenliegenden Bereich des Lastmeßsensors seitlich aus, so hat dies den Nachteil, daß beim Heben oder Senken der Last Kippbewegungen an der Last auftreten, die aufgrund des Beharrungsvermögens zu Lastrückwirkungen und damit Störsignalen führen, die ihrerseits unerwünschte Reaktionen des Steuerungssystems zur Folge haben.

Der Erfindung liegt die Aufgabe zugrunde, diese Nachteile zu vermeiden und ein Lastmeß- und Führungssystem zu schaffen, das bei geringen Abmessungen weitgehend rückwirkungsfrei arbeitet und ein feinfühliges Dirigieren der Last ermöglicht.

Diese Aufgabe löst die Erfindung dadurch, daß der Lastmeßsensor konzentrisch im Führungsgriff angeordnet ist, dessen Längsachse mit der Lastwirkungslinie zusammenfällt. Durch die Integration des Lastmeßsensors in den Führungsgriff ergibt sich ein geringstmöglicher Abstand zwischen diesem und der Last, wodurch ein feinfühliges Dirigieren der Last möglich wird und es wird gleichzeitig bei kleinstmöglicher Bauhöhe ein größtmöglicher Arbeitshub des Balancier-Hebegerätes erreicht.

Die koaxiale Anordnung von Führungsgriff, Lastmeßsensor und Lastwirkungslinie vermeidet geometrische Hebel, so daß bei Hubvorgängen Rückwirkungen aus Beharrungskräften auf das Lastmeßsystem vermieden werden.

Eine zweckmäßige Ausgestaltung der Erfindung ergibt sich dadurch, daß der Führungsgriff durch einen den Lastmeßsensor umgebenden Hohlkörper, insbesondere ein zylindrisches Rohr gebildet ist.

Dabei kann am oberen Ende des Hohlkörpers ein fest mit diesem verbundenes Kopfstück und in der Nähe des unteren Endes des Hohlkörpers ein gegenüber diesem längsverschiebliches Führungsstück vorgesehen sein, und es kann der Lastmeßsensor zwischen diesen angeordnet und mit ihnen verbunden sein.

Damit der Lastmeßsensor von allen äußeren Kräften und Momenten unbeeinflußt stets nur die Axialkraft am Führungsgriff mißt, kann der Lastmeßsensor raumgelenkig mit dem Kopf- und Führungsstück verbunden sein.

Damit die von der Last ausgeübte Axialkraft verlustfrei auf den Lastmeßsensor wirken kann, soll das Führungsstück reibungsarm, insbesondere unter Zwischenschaltung eines Wälzlagers in der Bohrung des Hohlkörpers gelagert sein.

Um zu vermeiden, daß z.B. infolge eines Bruches des Lastmeßsensors das Führungsstück nach unten aus den Hohlkörper heraustritt, kann an dem Hohlkörper eine Vorrichtung vorgesehen sein, die dies verhindert. Das kann beispielsweise ein am unteren Ende des Hohlkörpers sich radial nach innen erstreckender Bund sein, dessen Innendurchmesser kleiner als der Außendurchmesser des Führungsstückes ist. Ein solcher Bund kann auf einfache Weise durch eine in eine Umfangsnut der Bohrung des Hohlkörpers eingesetzte Scheibe gebildet sein.

Andrerseits ist es wünschenswert, an dem Hohlkörper eine weitere Einrichtung vorzusehen, die ein übermäßiges Hineinschieben des Führungsstückes in den Hohlkörper und die damit verbundene Gefahr der Stauchung des Lastmeßsensors verhindert. Eine solche Einrichtung kann durch einen den Hohlkörper diametral durchdringenden Bolzen gebildet sein, dem eine Anschlagfläche am Führungsstück mit geringem axialem Abstand gegenübersteht. Dadurch ist die Bewegungsmöglichkeit des Führungsstückes nach oben auf das Maß dieses geringen Abstandes begrenzt.

In vielen Fällen kann es zweckmäßig sein, den Lastmeßsensor mit einer Einrichtung zur Verstärkung des elektrischen Signals zu verbinden, wobei es im Rahmen der Erfindung möglich ist, diese Einrichtung zur Verstärkung innerhalb des Hohlkörpers unterzubringen.

Weiterhin können an dem Hohlkörper Schaltelemente zur Weiterleitung oder Unterbrechung der Signalströme vorgesehen sein. Schließlich ist es auch möglich, am oder im Hohlkörper einen Sender unterzubringen, dem die vom Lastmeßsensor gelieferten Signale zugeführt und von diesem drahtlos, insbesondere mittels elektromagnetischer Wellen zu einem Empfänger übertragen werden, der mit einer Steuerung für den Hubantrieb verbunden ist.

Zur besseren Handhabung des Führungsgriffs kann der Hohlkörper an seiner äußeren Mantelfläche eine Ummantelung aus einem polymeren Werkstoff tragen, die eine rutschsichere Oberflächenprofilierung aufweist.

Schließlich ergibt sich eine für das leichte Bewegen großer Massen vorteilhafte Ausführung, wenn die Ummantelung sich gegen in beiden axialen Richtungen wirkende Federelemente auf dem Hohlkörper verschieben läßt und dabei beim Überschreiten einer einstellbaren Hand-Führungskraft eine Schaltvorrichtung betätigt, welche ein Signal an die Steuerung sendet, so daß der Hubantrieb beim Heben auf erhöhte Hebekraft und beim Senken auf verringerte Hebekraft geschaltet wird.

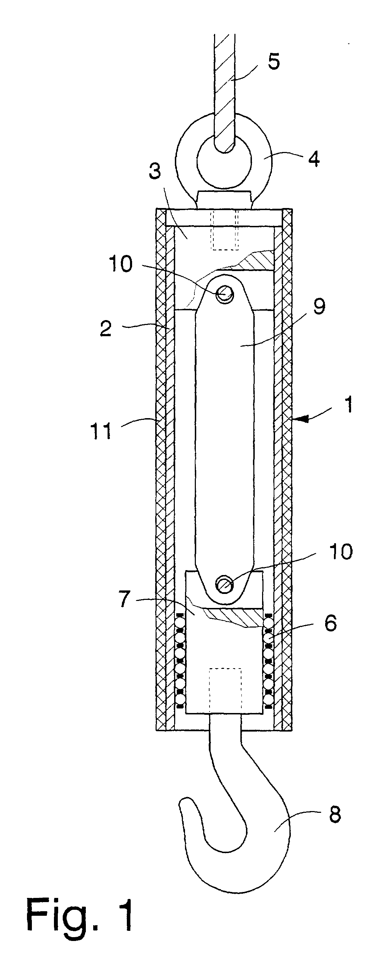

In den Zeichnungen sind Ausführungsbeispiele der Erfindung dargestellt. Die Figuren 1 bis 6 zeigen Längsschnitte bzw. Teil-Längsschnitte durch verschiedene Varianten erfindungsgemäßer Führungsgriffe.

Der in Fig. 1 dargestellte Führungsgriff 1 umfaßt den als zylindrisches Rohr ausgebildeten Hohlkörper 2, mit dem an seinem oberen Ende ein Kopfstück 3 fest verbunden ist, welches seinerseits eine Öse 4 zur Befestigung eines Zwischenorgans in Form eines Seiles 5 trägt.

In der Nähe des unteren Endes des Hohlkörpers 2 ist in diesem unter Zwischenschaltung von Wälzkörpern 6 das Führungsstück 7 längsverschieblich gelagert, das seinerseits ein Lastaufnahmemittel 8 in Form eines Lasthakens trägt.

Zwischen dem Kopfstück 3 und dem Führungsstück 7 ist ein Lastmeßsensor 9 angeordnet, der mittels Bolzen 10 raumgelenkig mit diesem verbunden ist. Der Lastmeßsensor 9 besteht aus einem Zugband, welches mit einem Dehnmeßstreifen versehen ist, der bei Belastung das entsprechende Signal liefert.

Schließlich ist der Hohlkörper 2 an seiner Außenmantelfläche mit einer Ummantelung 11 aus einem polymeren Werkstoff versehen, die zur besseren Handhabung mit einer rutschsicheren Oberflächenprofilierung versehen ist.

Wird bei dieser Ausführung an den Lasthaken 8 eine Last angehängt, so liefert der Lastmeßsensor 9 ein Signal, welches an eine weiterverarbeitende Steuerung weitergeleitet wird, die ihrerseits einen auf das Seil 5 wirkenden Hubantrieb so steuert, daß die Last in der Schwebe gehalten wird. Wenn die Last manuell bewegt werden soll, so umfaßt die Bedienungsperson den durch den Hohlkörper 2 gebildeten Führungsgriff und kann nun durch Anheben oder Absenken dieses Griffes die Last quasi kraftfrei bewegen.

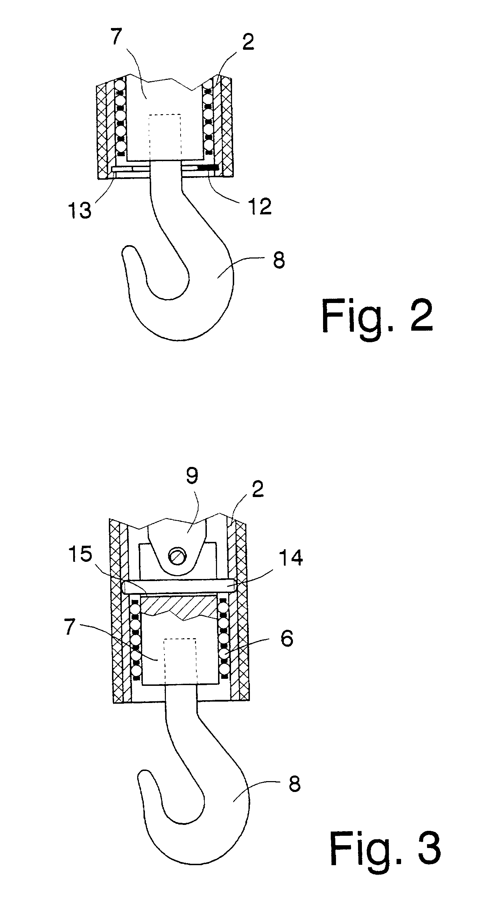

Um zu verhindern, daß bei einem eventuellen Bruch des Lastmeßsensors das Führungsstück 7 nach unten aus dem Hohlkörper 2 heraustreten und damit die angehängte Last nach unten fallen kann, ist bei der Ausführung nach Fig. 2 eine Einrichtung vorgesehen, die das verhindert. Diese besteht aus einer Scheibe 12, die in eine Umfangsnut 13 in die Bohrung des Hohlkörpers 2 eingreift und deren Innendurchmesser kleiner als der Außendurchmesser des Führungsstückes 7 ist. Auf diese Weise wird ein Heraustreten des Führungsstückes 7 aus dem Hohlkörper 2 nach unten hin sicher vermieden.

Fig. 3 zeigt eine weitere Einrichtung, die ein übermäßiges Hineinschieben des Führungsstückes 7 in den Hohlkörper 2, was eine Stauchung des Lastmeßsensors 9 zur Folge haben könnte, verhindert. Dies wird erreicht durch einen den Hohlkörper 2 diametral durchdringenden Bolzen 14, dem eine Anschlagfläche 15 am Führungsstück 7 mit geringem axialen Abstand gegenübersteht. Wenn z.B. bei einem unvorsichtigen Absetzen der Last eine vertikal nach oben auf den Lasthaken 8 wirkende Kraft ausgeübt wird, so kann dieser das Führungsstück 7 nur so weit nach oben verschieben, bis die Anschlagfläche 15 am Bolzen 14 zur Anlage kommt, wodurch ein Stauchen und damit eine Beschädigung des Lastmeßsensors 9 mit Sicherheit vermieden wird. Diese Ausführung hat den weiteren Vorteil, daß dadurch, daß der Bolzen 14 formschlüssig in eine diametrale Nut des Führungsstückes 7 eingreift eine Verdrehsicherung für das Führungsstück 7 erreicht wird, wodurch eine Beschädigung des Lastmeßsensors infolge Torsion ausgeschlossen wird.

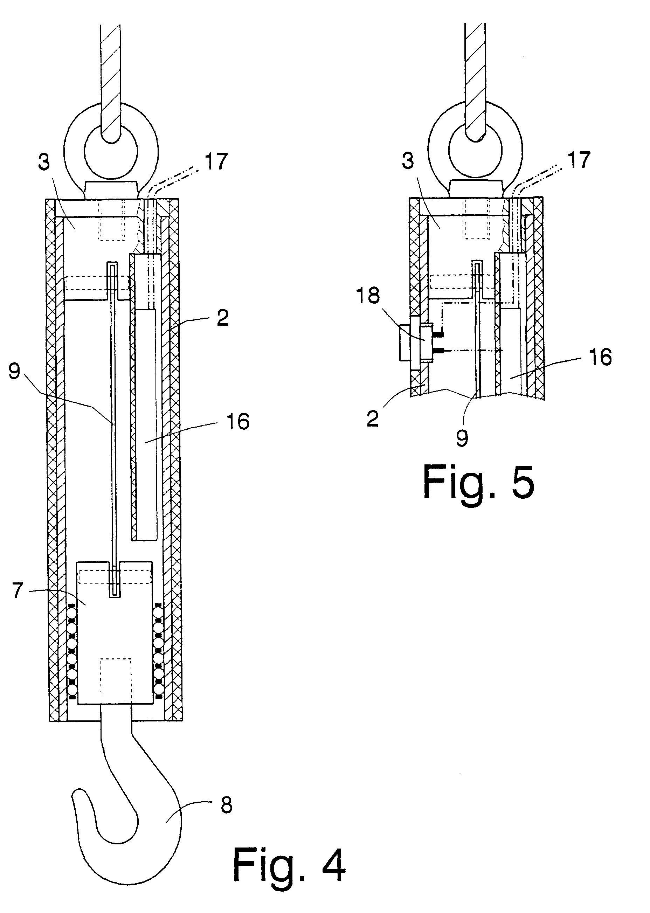

In Fig. 4 ist eine Variante dargestellt, bei der im Hohlkörper 2 zusätzlich ein Verstärker 16 untergebracht ist, der dazu dient, das vom Lastmeßsensor 9 gelieferte Signal elektrisch zu verstärken, welches dann über eine Signalleitung 17 an eine - nicht dargestellte - Steuerung für einen Hubantrieb weitergeleitet wird.

In Fig. 5 ist eine Variante dieser Ausführung gezeigt, bei der zusätzlich ein Schaltelement 18 in den Hohlkörper 2 eingebaut ist, durch welches wahlweise die Weiterleitung oder Unterbrechung des Signalstromes vom Verstärker 16 zur Signalleitung 17 erreicht werden kann.

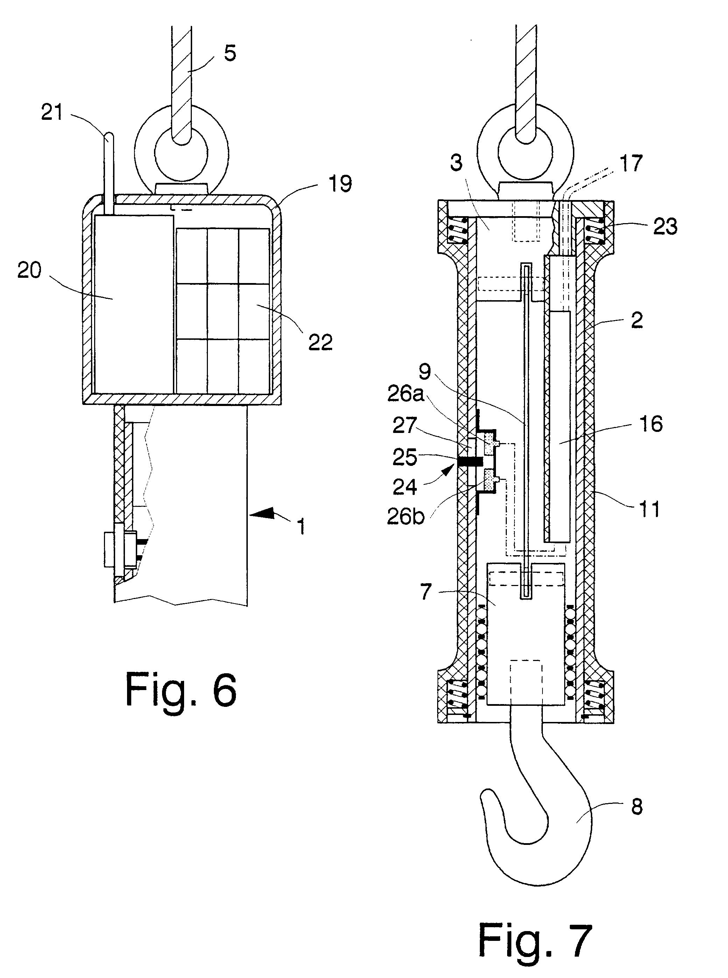

In Fig. 6 ist eine Ausführung dargestellt, bei der das vom Verstärker gelieferte Signal nicht über eine Signalleitung, sondern auf drahtlosem Wege, insbesondere mittels elektromagnetischer Wellen übertragen wird. Zu diesem Zweck ist in einem auf den Führungsgriff 1 aufgesetzten tragenden Gehäuse 19 ein Sender 20 mit einer Antenne 21 untergebracht, der von Batterien 22 mit der nötigen elektrischen Energie versorgt wird. Die von der Antenne 21 abgestrahlten elektromagnetischen Wellen können von einem Empfänger aufgenommen werden, der mit einer Steuerung für den Hubantrieb verbunden ist

Fig. 7 zeigt schließlich eine Ausführung, bei der die Ummantelung 11 axial verschiebbar auf dem Hohlkörper 2 gelagert ist und bei ihrer Verschiebung eine Schaltvorrichtung 24 betätigt. Dabei ist sie axial über Federn 23 derart gegenüber dem Hohlkörper 2 abgestützt, daß sie im lastfreien Zustand eine Mittellage einnimmt. Die Ummantelung 11 trägt einen Schaltstift 25, der sich radial durch ein sich axial erstreckendes Langloch 27 im Hohlkörper 2 erstreckt und der in seiner Mittellage keine Funktion ausübt, jedoch in einer oberen Stellung das Schaltelement 26a und in einer unteren Stellung das Schaltelement 26b aktiviert. Bei Aktivierung des oberen Schaltelements 26a wird der Hubantrieb auf erhöhte Hubkraft und bei Aktivierung des unteren Schaltelements 26b wird er auf verringerte Hubkraft geschaltet. Die Umschaltung erfolgt ohne Zutun des Bedieners, wenn dieser große Massen leicht bewegen möchte und daher eine erhöhte Handkraft aufwendet, die zum Verschieben der Ummantelung und damit zum Schalten des Systems führt. Die Schaltvorrichtung kann mit unterschiedlichen, an sich bekannten Bauelementen aufgebaut sein, z.B. mit mechanisch betätigten Mikroschaltern, mit einem magnetischen Schaltstift und Hall-Sensoren, mit einem metallischen Schaltstift und induktiven Sensoren und dergleichen.

### Bezugszeichenliste

- 1: Führungsgriff
- 2: Hohlkörper
- 3: Kopfstück
- 4: Öse
- 5: Seil
- 6: Wälzkörper
- 7: Führungsstück
- 8: Lastaufnahmemittel
- 9: Lastmeßsensor
- 10: Bolzen
- 11: Ummantelung
- 12: Scheibe
- 13: Umfangsnut
- 14: Bolzen
- 15: Anschlagfläche
- 16: Verstärker
- 17: Signalleitung
- 18: Schaltelement
- 19: tragendes Gehäuse
- 20: Sender
- 21: Antenne
- 22: Batterien
- 23: Federn
- 24: Schaltvorrichtung
- 25: Schaltstift
- 26a: Schaltelement
- 26b: Schaltelement
- 27: Langloch

## Patentansprüche

1. Balancier-Hebegerät zum Heben und quasi kraftfreien manuellen Bewegen einer Last, umfassend einen Hubantrieb, der mittels eines biegeschlaffen Zwischenorgans **(5)** mit einem Lastaufnahmemittel **(8)** verbunden ist, wobei zwischen Hubantrieb und Lastaufnahmemittel **(8)** oberhalb des letzteren ein Lastmeßsensor **(9)** eingeschaltet ist, der ein dem gemessenen Lastwert entsprechendes Signal an eine weiterverarbeitende Steuerung liefert, die ihrerseits den Hubantrieb so steuert, daß die Last in der Schwebe gehalten ist, und wobei in Kraftflußrichtung zwischen Lastmeßsensor **(9)** und Zwischenorgan **(5)** ein Führungsgriff **(1)** angeordnet ist, **dadurch gekennzeichnet, daß** der Lastmeßsensor **(9)** konzentrisch im Führungsgriff **(1)** angeordnet ist, dessen Längsachse mit der Lastwirkungslinie zusammenfällt.

2. Balancier-Hebegerät nach Anspruch 1, **dadurch gekennzeichnet, daß** der Führungsgriff **(1)** durch einen den Lastmeßsensor **(9)** umgebenden Hohlkörper **(2)**, insbesondere ein zylindrisches Rohr gebildet ist.

3. Balancier-Hebegerät nach Anspruch 2, **dadurch gekennzeichnet, daß** am oberen Ende des Hohlkörpers **(2)** ein fest mit diesem verbundenes Kopfstück **(3)** und in der Nähe des unteren Endes des Hohlkörpers **(2)** ein gegenüber diesem längsverschiebliches Führungsstück **(7)** vorgesehen ist, und daß der Lastmeßsensor **(9)** zwischen diesen angeordnet und mit diesen verbunden ist.

4. Balancier-Hebegerät nach Anspruch 3, **dadurch gekennzeichnet, daß** der Lastmeßsensor **(9)** raumgelenkig mit dem Kopf- und Führungsstück **(3, 7)** verbunden ist.

5. Balancier-Hebegerät nach Anspruch 3, **dadurch gekennzeichnet, daß** das Führungsstück **(7)** reibungsarm, insbesondere unter Zwischenschaltung eines Wälzlagers **(6)** in der Bohrung des Hohlkörpers **(2)** gelagert ist.

6. Balancier-Hebegerät nach Anspruch 3, 4 oder 5, **dadurch gekennzeichnet, daß** an dem Hohlkörper **(2)** eine Einrichtung vorgesehen ist, die ein Heraustreten des Führungsstückes **(7)** aus dem Hohlkörper **(2)**, z.B. infolge eines Bruches des Lastmeßsensors **(9)**, verhindert.

7. Balancier-Hebegerät nach Anspruch 6, **dadurch gekennzeichnet, daß** am unteren Ende des Hohlkörpers **(2)** ein radial nach innen gerichteter Bund **(12)** vorgesehen ist, dessen Innendurchmesser kleiner als der Außendurchmesser des Führungsstückes **(7)** ist.

8. Balancier-Hebegerät nach Anspruch 7, **dadurch gekennzeichnet, daß** der Bund durch eine in eine Umfangsnut **(13)** in der Bohrung des Hohlkörpers **(2)** eingesetzte Scheibe **(12)** gebildet ist.

9. Balancier-Hebegerät nach Anspruch 3, 4 oder 5, **dadurch gekennzeichnet, daß** an dem Hohlkörper **(2)** eine Einrichtung vorgesehen ist, die ein übermäßiges Hineinschieben des Führungsstückes **(7)** in den Hohlkörper **(2)** und die damit verbundene Gefahr einer Stauchung des Lastmeßsensors **(9)** verhindert.

10. Balancier-Hebegerät nach Anspruch 9, **dadurch gekennzeichnet, daß** ein den Hohlkörper **(2)** diametral durchdringender Bolzen **(14)** vorgesehen ist, dem eine Anschlagfläche **(15)** am Führungsstück **(7)** mit geringem axialen Abstand gegenübersteht.

11. Balancier-Hebegerät nach einem der Ansprüche 2 bis 10, **dadurch gekennzeichnet, daß** der Hohlkörper **(2)** zusätzlich zu dem Lastmeßsensor **(9)** eine mit diesem verbundene Einrichtung **(16)** zur Verstärkung des elektrischen Signals enthält.

12. Balancier-Hebegerät nach einem der Ansprüche 2 bis 11, **dadurch gekennzeichnet, daß** an dem Hohlkörper **(2)** Schaltelemente **(18)** zur Weiterleitung oder Unterbrechung der Signalströme vorgesehen sind.

13. Balancier-Hebegerät nach einem der Ansprüche 2 bis 12, **dadurch gekennzeichnet, daß** am oder im Hohlkörper **(2)** ein Sender **(20)** untergebracht ist, dem die vom Lastmeßsensor **(9)** gelieferten Signale zuführbar und von diesem drahtlos, insbesondere mittels elektromagnetischer Wellen zu einem Empfänger übertragbar sind, der mit einer Steuerung für den Hubantrieb verbunden ist.

14. Balancier-Hebegerät nach einem der Ansprüche 2 bis 13, **dadurch gekennzeichnet, daß** der Hohlkörper **(2)** an seiner äußeren Mantelfläche eine Ummantelung **(11)** aus einem polymeren Werkstoff trägt, die eine rutschsichere Oberflächenprofilierung aufweist.

15. Balancier-Hebegerät nach einem der Ansprüche 2 bis 14, **dadurch gekennzeichnet, daß** die Ummantelung **(11)** gegen in beiden axialen Richtungen wirkende Federelemente **(23)** auf dem Hohlkörper **(2)** verschiebbar angeordnet ist und bei ihrer Verschiebung eine am Hohlkörper befestigte Schaltvorrichtung **(25, 26a, 26b)** betätigt, die in den außermittigen Stellungen der Ummantelung **(11)** gegenüber dem Hohlkörper **(2)** jeweils ein Signal zur Steuerung einer forcierten Funktion des Hubantriebes abgibt.

16. Balancier-Hebegerät nach Anspruch 15, **dadurch gekennzeichnet, daß** die Ummantelung **(11)** einen Schaltstift **(25)** trägt, der sich radial durch ein sich axial erstreckendes Langloch **(27)** im Hohlkörper **(2)** erstreckt und dort in jeder von der Mittellage abweichenden Stellung auf ein Schaltelement **(26a, 26b)** einwirkt.

## Claims

1. Balancing and lifting apparatus for the lifting and virtually unpowered manual movement of a load, comprising a lifting drive connected by means of a flexible intermediate part (5) to a load suspension means (8), where a load weight sensor (9) is interposed between the lifting device and the load suspension means (8) above the latter; this sensor sends a signal corresponding to a measured load weight to a processing control system, which in turn controls the lifting drive in such a way that the load is held in balance; and where a guide handle (1) is positioned, in the direction of the movement of force, between the load weight sensor (9) and the intermediate part (5); **characterised by** the fact that the load weight sensor (9) is positioned concentrically in the guide handle (1), the longitudinal axis of which coincides with the direction of the load.

2. Balancing and lifting apparatus as in Claim 1, **characterised by** the fact that the guide handle (1) consists of a hollow body (2), in particular a cylindrical tube, which encircles the load weight sensor (9).

3. Balancing and lifting apparatus as in Claim 2, **characterised by** the fact that there is, at the top of the hollow body (2), a head piece (3) which is connected firmly to it and, in the area of the lower end of the hollow body (2), a guide piece (7) which can be moved lengthwise in relation to it; and that the load weight sensor (9) is positioned between these two and is connected to them.

4. Balancing and lifting apparatus as in Claim 3, **characterised by** the fact that the load weight sensor (9) is connected to the head piece (3) and the guide piece (7) by an articulated joint with clearance.

5. Balancing and lifting apparatus as in Claim 3, **characterised by** the fact that the guide piece (7) is mounted inside the bore of the hollow body (2) in such a way as to give very low friction, in particular by the insertion of a roller bearing (6).

6. Balancing and lifting apparatus as in Claim 3, 4 or 5, **characterised by** the fact that there is a device on the hollow body (2) to prevent the guide piece (7) from coming out of the hollow body (2), for example as the result of breakage of the load weight sensor (9).

7. Balancing and lifting apparatus as in Claim 6, **characterised by** the fact that there is a flange (12) directed radially inwards at the lower end of the hollow body (2), the internal diameter of said flange being smaller than the external diameter of the guide piece (7).

8. Balancing and lifting apparatus as in Claim 7, **characterised by** the fact that the flange consists of a washer (12) set in a peripheral groove (13) in the bore of the hollow body (2).

9. Balancing and lifting apparatus as in Claim 3, 4 or 5, **characterised by** the fact that there is a device on the hollow body (2) to prevent the guide piece (7) from being pushed too far into the hollow body (2) and the resulting risk of crushing the load weight sensor (9).

10. Balancing and lifting apparatus as in Claim 9, **characterised by** the fact that there is a pin (14) which passes diametrically through the hollow body (2), and a stop face (15) on the guide piece (7) which faces said pin with a small axial clearance.

11. Balancing and lifting apparatus as in one of Claims 2 to 10, **characterised by** the fact that the hollow body (2) contains, in addition to the load weight sensor (9), a device (16) connected to same to amplify the electrical signal.

12. Balancing and lifting apparatus as in one of Claims 2 to 11, **characterised by** the fact that there are switch elements (18) on the hollow body (2) to transmit or interrupt the signal streams.

13. Balancing and lifting apparatus as in one of Claims 2 to 12, **characterised by** the fact that a transmitter (20) is positioned on or inside the hollow body (2), to which transmitter can be passed the signals from the load weight sensor (9); these signals can then be sent by said transmitter in a wire-free manner, in particular by means of electromagnetic waves, to a receiver which is connected to a control system for the lifting drive.

14. Balancing and lifting apparatus as in one of Claims 2 to 13, **characterised by** the fact that the hollow body (2) has, on its outer surface, a covering (11) - made of a polymeric material - which provides a non-slip surface finish.

15. Balancing and lifting apparatus as in one of Claims 2 to 14, **characterised by** the fact that the cover (11) is positioned on the hollow body (2) in such a way that it can be moved against spring elements (23) which act in both axial directions, and that when it is moved it operates a switching device (25, 26a, 26b) attached to the hollow body (2); said switching device gives an appropriate signal to control the increased function of the lifting drive when the cover (11) is in a non-central position in relation to the hollow body (2).

16. Balancing and lifting apparatus as in Claim 15, **characterised by** the fact that the cover (11) has an actuating pin (25) which passes radially through an axial slot (27) in the hollow body (2), and which acts on a switch element (26a, 26b) whenever its position deviates from the central position.

## Revendications

1. Appareil de levage et d'équilibrage pour lever et déplacer manuellement pratiquement sans force une charge, comportant un entraînement de levage qui est relié, au moyen d'un organe intermédiaire (5) lâche à la flexion, à un moyen de réception de charge (8), un capteur de mesure de charge (9) étant prévu entre l'entraînement de levage et le moyen de réception de charge (8) au-dessus de ce dernier, capteur qui délivre un signal correspondant à la valeur de charge mesurée à une commande de traitement ultérieur, qui, à son tour, commande l'entraînement de levage, de sorte que la charge est maintenue en suspension et, dans la direction du flux de force entre le capteur de mesure de charge (9) et l'organe intermédiaire (5), il est agencé une poignée de guidage (1)
**caractérisé en ce que** le capteur de mesure de charge (9) est agencé de façon concentrique dans la poignée de guidage (1), dont l'axe longitudinal coïncide avec la ligne d'influence de la charge.

2. Appareil de levage et d'équilibrage selon la revendication 1,
**caractérisé en ce que** la poignée de guidage (1) est formée par un corps creux (2), entourant le capteur de mesure de charge (9), en particulier un tube cylindrique.

3. Appareil de levage et d'équilibrage selon la revendication 2,
**caractérisé en ce que**, à l'extrémité supérieure du corps creux (2), il est prévu une pièce de tête (3) reliée à celui-ci et, à proximité de l'extrémité inférieure du corps creux (2), il est prévu une pièce de guidage (7) longitudinalement déplaçable par rapport à celui-ci, et **en ce que** le capteur de mesure de charge (9) est agencé entre celles-ci et est relié à celles-ci.

4. Appareil de levage et d'équilibrage selon la revendication 3,
**caractérisé en ce que** le capteur de mesure de charge (9) est relié de façon spatialement articulée à la pièce de tête et à la pièce de guidage (3, 7).

5. Appareil de levage et d'équilibrage selon la revendication 3,
**caractérisé en ce que** la pièce de guidage (7) est montée sans frottement, en particulier par l'intermédiaire d'un palier à roulement (6), dans le perçage du corps creux (2).

6. Appareil de levage et d'équilibrage selon la revendication 3, 4 ou 5,
**caractérisé en ce que**, sur le corps creux (2), il est prévu un dispositif qui empêche un échappement de la pièce de guidage (7) du corps creux (2), par exemple par suite d'une rupture du capteur de mesure de charge (9).

7. Appareil de levage et d'équilibrage selon la revendication 6,
**caractérisé en ce que**, à l'extrémité inférieure du corps creux (2), il est prévu un collet (12) orienté radialement vers l'intérieur, dont le diamètre interne est plus petit que le diamètre externe de la pièce de guidage (7).

8. Appareil de levage et d'équilibrage selon la revendication 7,
**caractérisé en ce que** le collet est formé par un disque (12) monté dans une gorge périphérique (13) dans le perçage du corps creux (2).

9. Appareil de levage et d'équilibrage selon la revendication 3, 4 ou 5,
**caractérisé en ce que**, sur le corps creux (2), il est prévu un dispositif qui empêche une trop grande pénétration de la pièce de guidage (7) dans le corps creux (2) et le risque, lié à cela, d'un écrasement du capteur de mesure de charge (9).

10. Appareil de levage et d'équilibrage selon la revendication 9,
**caractérisé en ce qu'**il est prévu un axe (14) traversant diamétralement le corps creux (2), axe qui est en regard d'une surface de butée (15) sur la pièce de guidage (7) à faible distance axiale.

11. Appareil de levage et d'équilibrage selon une des revendications 2 à 10,
**caractérisé en ce que** le corps creux (2) comporte, en plus du capteur de mesure de charge (9), un dispositif (16), relié à celui-ci, pour amplifier le signal électrique.

12. Appareil de levage et d'équilibrage selon une des revendications 2 à 11,
**caractérisé en ce que**, sur le corps creux (2), sont prévus des éléments de commutation (18) pour transmettre ou interrompre les courants de signaux.

13. Appareil de levage et d'équilibrage selon une des revendications 2 à 12,
**caractérisé en ce que**, sur ou dans le corps creux (2), il est agencé un émetteur (20) auquel les signaux délivrés par le capteur de mesure de charge (9) peuvent être amenés et être transmis, de celui-ci, sans fil, en particulier au moyen d'ondes électromagnétiques, à un récepteur qui est relié à une commande pour l'entraînement de levage.

14. Appareil de levage et d'équilibrage selon une des revendications 2 à 13,
**caractérisé en ce que** le corps creux (2) porte, sur sa surface d'enveloppe externe, une gaine (11) en une matière polymère qui présente un profilage de surface antidérapant.

15. Appareil de levage et d'équilibrage selon une des revendications 2 à 14,
**caractérisé en ce que** la gaine (11) est agencée de façon déplaçable sur le corps creux (2) à l'encontre d'éléments élastiques (23) agissant dans les deux directions axiales et, lors de son déplacement, actionne un dispositif de commutation (25, 26a, 26b) fixé au corps creux, qui, dans les positions excentrées de la gaine (11) par rapport au corps creux (2), fournit, à chaque fois, un signal pour la commande d'un fonctionnement forcé de l'entraînement de levage.

16. Appareil de levage et d'équilibrage selon la revendication 15,
**caractérisé en ce que** la gaine (11) porte une tige de commutation (25) qui s'étend radialement, à travers un trou oblong (27) s'étendant axialement, dans le corps creux (2) et là, dans chaque position s'écartant de la position médiane, agit sur un élément de commutation (26a, 26b).
